# EUROPEAN PATENT APPLICATION

(11) **EP 4 622 371 A1**
(43) Date of publication of application: **24.09.2025**
(21) Application number: 23896445.6
(22) Date of filing: 02.11.2023
(51) Int. Cl.: H04W 72/0446

(54) **COMMUNICATION METHOD AND APPARATUS**

(30) Priority: 28.11.2022 CN 202211500074
(71) Applicant: Huawei Technologies Co., Ltd., Shenzhen, Guangdong 518129 (CN)
(72) Inventor: YI, Xiongshu, Shenzhen, Guangdong 518129 (CN); DANG, Juntao, Shenzhen, Guangdong 518129 (CN)
(74) Representative: Gill Jennings & Every LLP
(86) International application number: PCT/CN2023/129418
(87) International publication number: WO 2024/114291

(57) **Abstract**

This application provides a communication method and apparatus. The method includes: when no transmission of a downlink signal or a downlink channel is performed at a time domain location of a first resource through m transmit channels, switching the m transmit channels to o receive channels, where the o receive channels and the m transmit channels correspond to a same antenna element; and receiving, on the first resource, an uplink signal and/or an uplink channel from at least one terminal device through o+n receive channels, where m, o, and n are positive integers. The method may be applied to a subband full duplex technology to increase an array gain for an uplink signal.

## Description

### CROSS-REFERENCE TO RELATED APPLICATIONS

This application claims priority to Chinese Patent Application No. 202211500074.2, filed with the China National Intellectual Property Administration on November 28, 2022 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With the global commercial deployment of 5G, diversified services and applications for enhanced mobile broadband (enhanced mobile broadband, eMBB) are becoming increasingly popular for to-consumer (to consumer, TOC) and to-business (to business, TOB) use cases. In addition, with the rapid development of industry digitalization, a higher uplink data rate and capacity are required. However, this requirement has not been well met.

A subband full duplex technology can be used to implement simultaneous reception and transmission of an uplink signal and a downlink signal in different frequency domains. To avoid interference from a transmitted signal to a received signal in an active antenna unit (active antenna unit, AAU) of a network device, the network device needs to implement sufficient interference isolation between the transmitted signal and the received signal. Therefore, an antenna array needs to be partitioned, so that a part of the array is used for transmission and the other part is used for reception. In this case, there is sufficient space isolation between subarrays. However, this also means that the network device cannot use the entire antenna array for uplink signal reception, causing an array loss of signal reception.

### SUMMARY

This application provides a communication method and apparatus, to increase an uplink array gain.

According to a first aspect, a communication method is provided. The method may be implemented by a network device or a component in the network device. The component in this application may include, for example, at least one of an AAU, a chip, a chip system, a processor, a transceiver, a processing unit, or a transceiver unit. For example, an execution body is the network device. The method may be implemented through the following steps: When no transmission of a downlink signal or a downlink channel is performed at a time domain location of a first resource through m transmit channels, the network device may switch the m transmit channels to o receive channels, where the o receive channels and the m transmit channels correspond to a same antenna element. The network device may further receive, on the first resource, an uplink signal and/or an uplink channel from at least one terminal device through o+n receive channels, where m, o, and n are positive integers.

Based on the method, if downlink transmission is not performed on the first resource through the m transmit channels of the network device, the network device may switch the m transmit channels to the o receive channels, to increase an array gain for receiving the uplink signal on the first resource. Especially the application of the method in a subband full duplex technology can increase an array gain for an uplink signal.

In a possible implementation, the first resource is an uplink resource and/or a downlink resource.

In a possible implementation, the time domain location of the first resource is at least one slot or at least one OFDM symbol.

Based on this implementation, symbol-level or slot-level channel adjustment may be implemented.

In a possible implementation, when transmission of a downlink signal or a downlink channel needs to be performed at a time domain location of a second resource through the m transmit channels, the network device may further switch the o receive channels to the m transmit channels.

Based on this implementation, when transmission of a downlink signal or a downlink channel is performed on the second resource, the network device may switch the o receive channels to the m transmit channels, so that downlink transmission is performed through the m transmit channels.

In a possible implementation, the second resource is a downlink resource.

In a possible implementation, the time domain location of the second resource is at least one slot or at least one OFDM symbol.

Based on this implementation, symbol-level or slot-level channel adjustment may be implemented.

According to a second aspect, a communication apparatus is provided. The apparatus can implement the method performed by the network device in any one of the first aspect and the possible implementations of the first aspect. The apparatus is, for example, a network device or a component in the network device.

In an optional implementation, the apparatus may include modules that correspond to, in a one-to-one manner, the method/operations/steps/actions described in any one of the first aspect and the possible implementations of the first aspect. The module may be implemented by a hardware circuit, software, or a hardware circuit in combination with software. In an optional implementation, the apparatus includes a processing unit (also referred to as a processing module sometimes) and a communication unit (also referred to as a communication module, a transceiver module, or a transceiver unit sometimes). The communication unit can implement a sending function and a receiving function. When the communication unit implements the sending function, the communication unit may be referred to as a sending unit (also referred to as a sending module sometimes). When the communication unit implements the receiving function, the communication unit may be referred to as a receiving unit (also referred to as a receiving module sometimes). The sending unit and the receiving unit may be a same functional module, and the functional module can implement the sending function and the receiving function. Alternatively, the sending unit and the receiving unit may be different functional modules, and the transceiver unit is a general term of these functional modules.

For another example, the apparatus includes a processor, coupled to a memory, and configured to execute instructions in the memory, to implement the method described in any one of the first aspect and the possible implementations of the first aspect. Optionally, the apparatus further includes another component, for example, a memory, an antenna, an input/output module, a transceiver, or a communication interface. These components may be hardware, software, or a combination of software and hardware.

According to a third aspect, a computer-readable storage medium is provided. The computer-readable storage medium is configured to store a computer program or instructions, and when the computer program or the instructions are run, the method according to any one of the possible implementations of the first aspect is implemented.

According to a fourth aspect, a computer program product including instructions is provided. When the computer program product runs on a computer, the method according to any one of the possible implementations of the first aspect is implemented.

According to a fifth aspect, a chip system is provided. The chip system includes a logic circuit (which may alternatively be understood as that the chip system includes a processor, and the processor may include a logic circuit and the like), and may further include an input/output interface. The input/output interface may be configured to receive a message, or may be configured to send a message. The input/output interface may be a same interface, that is, the same interface can implement both a sending function and a receiving function. Alternatively, the input/output interface includes an input interface and an output interface. The input interface is configured to implement the receiving function, that is, configured to receive a message. The output interface is configured to implement the sending function, that is, configured to send a message. The logic circuit may be configured to perform an operation other than the sending and receiving functions in any one of the first aspect and the possible implementations of the first aspect. The logic circuit may be further configured to transmit a message to the input/output interface, or receive, from the input/output interface, a message from another communication apparatus. The chip system may be configured to implement the method according to any one of the first aspect and the possible implementations of the first aspect. The chip system may include a chip, or may include a chip and another discrete device.

Optionally, the chip system may further include a memory, and the memory may be configured to store instructions. The logic circuit may invoke the instructions stored in the memory to implement a corresponding function.

According to a sixth aspect, a communication system is provided. The communication system may include a network device and at least one terminal apparatus. The terminal apparatus is, for example, a terminal device or a component in the terminal device. The network device may be configured to perform the method according to any one of the first aspect and the possible implementations of the first aspect, and the at least one terminal apparatus may be configured to send an uplink signal or an uplink channel.

For technical effects achieved by the second aspect to the sixth aspect, refer to the descriptions in the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of a structure of an array in an AAU;
FIG. 3 is a diagram of another structure of an array in an AAU;
FIG. 4 is a schematic flowchart of a communication method according to an embodiment of this application;
FIG. 5 is a diagram of a structure of an array in an AAU according to an embodiment of this application;
FIG. 6 is a diagram of a channel switching manner according to an embodiment of this application;
FIG. 7 is a diagram of another channel switching manner according to an embodiment of this application;
FIG. 8 is a diagram of another channel switching manner according to an embodiment of this application;
FIG. 9 is a diagram of another channel switching manner according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

### DESCRIPTION OF EMBODIMENTS

Embodiments of this application provide a communication method and apparatus. The method and the apparatus are based on a same inventive concept. Because problem-resolving principles for the method and the apparatus are similar, for implementations of the apparatus and the method, refer to each other, and no repeated description is provided. In descriptions of embodiments of this application, the term "and/or" describes an association relationship between associated objects and indicates that three relationships may exist. For example, A and/or B may indicate the following three cases: only A exists, both A and B exist, and only B exists. The character "/" generally indicates an "or" relationship between the associated objects. In this application, "at least one" means "one or more", and "a plurality of" means "two or more". In addition, it should be understood that in descriptions of this application, terms such as "first" and "second" are merely used for distinguishing and description, but should not be understood as indicating or implying relative importance, or should not be understood as indicating or implying a sequence.

The communication method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a Bluetooth system, a Wi-Fi system, a LoRa system, or an internet of vehicles system. The method provided in embodiments of this application may be further applied to a satellite communication system. The satellite communication system may be integrated with the foregoing communication systems.

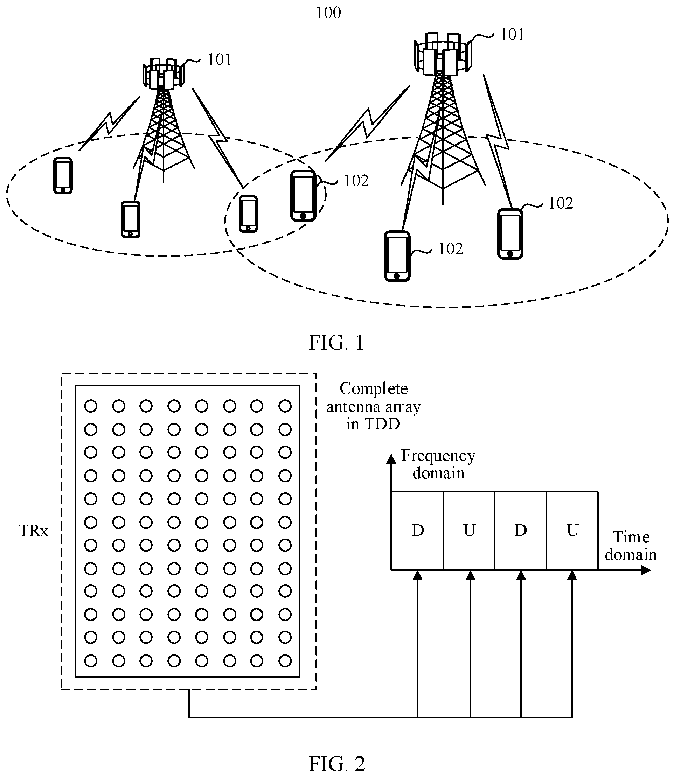

For ease of understanding of embodiments of this application, an application scenario of this application is described by using an architecture of a communication system shown in FIG. 1 as an example. As shown in FIG. 1, a communication system 100 includes a network device 101 and a terminal device 102. The apparatus provided in embodiments of this application may be applied to the network device 101 or may be applied to the terminal device 102. It may be understood that FIG. 1 shows only a possible architecture of a communication system to which embodiments of this application may be applied. In another possible scenario, the architecture of the communication system may alternatively include another device.

The network device 101 is a node in a radio access network (radio access network, RAN), and may also be referred to as a base station or a RAN node (or device). Currently, some examples of an access network device are: a gNB/NR-NB, a macro base station, a micro base station, an indoor base station, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP), a satellite device, a relay node, a donor node, a radio controller in a cloud radio access network (cloud radio access network, CRAN) scenario, a road side unit (road side unit, RSU) in a vehicle-to-everything (vehicle-to-everything, V2X) technology, or a network device in a 5G communication system, or an access network device or a module of the access network device in an open access network (open RAN, ORAN) system, or a network device in a future possible communication system. Alternatively, the network device 101 may be another device having a network device function. For example, the network device 101 may alternatively be a device functioning as a network device in device-to-device (device-to-device, D2D) communication, internet of vehicles communication, or machine-to-machine communication. Alternatively, the network device 101 may be a network device in a future possible communication system. It may be understood that a plurality of access network devices in a communication system may be of a same type or different types.

In some deployments, a gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a medium access control (media access control, MAC) layer, and a physical (physical, PHY) layer. Information of the RRC layer eventually becomes information of the PHY layer, or is converted from the information of the PHY layer. Therefore, in this architecture, high layer signaling such as RRC layer signaling or PDCP layer signaling may also be considered as being sent by the DU or sent by the DU and the RU. It may be understood that a network device may be a CU node, a DU node, or a device including the CU node and the DU node. In addition, the CU may be classified as a network device in an access network RAN, or the CU may be classified as a network device in a core network CN. This is not limited herein. In the ORAN system, the CU may also be referred to as an O-CU, the DU may also be referred to as an open (open, O)-DU, a CU-CP may also be referred to as an O-CU-CP, a CU-UP may also be referred to as an O-CU-UP, and the RU may also be referred to as an O-RU.

The terminal device 102 may also be referred to as a user equipment (user equipment, UE), a mobile station (mobile station, MS), a mobile terminal (mobile terminal, MT), or the like, and is a device that provides a user with voice or data connectivity, or may be an internet of things device. For example, a terminal device includes a handheld device, a vehicle-mounted device, or the like that has a wireless connection function. Currently, the terminal device may be a mobile phone, a tablet computer, a laptop computer, a palmtop computer, a mobile internet device (mobile internet device, MID), a wearable device (for example, a smartwatch, a smart bracelet, or a pedometer), a vehicle-mounted device (for example, an automobile, a bicycle, an electric mobile, an airplane, a ship, a train, or a railway high-speed train), a virtual reality (virtual reality, VR) device, an augmented reality (augmented reality, AR) device, a wireless terminal in industrial control, a smart household device (for example, a refrigerator, a television, an air conditioner, or an electricity meter), an intelligent robot, a workshop device, a wireless terminal in unmanned driving, a wireless terminal in a tele-operation, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, or an airplane), or the like. The terminal device may alternatively be another device having a terminal function. For example, the terminal device may alternatively be a device functioning as a terminal in the D2D communication. In this application, a terminal device having wireless sending and receiving functions and a chip that can be disposed in the foregoing terminal device are collectively referred to as a terminal device.

With reference to the communication system shown in FIG. 1, the following describes in detail the communication method provided in embodiments of this application.

To better understand the solutions provided in embodiments of this application, the following first describes some related terms, concepts, or procedures in embodiments of this application.

### 1. Communication resource

In this application, the communication resource may include an uplink resource and a downlink resource. The uplink resource is a resource used by the terminal device to perform uplink sending to the network device. In this application, unless otherwise specified, a resource is a time-frequency resource, that is, a combination of a time domain resource and a frequency domain resource.

The following separately describes the time domain resource and the frequency domain resource.

For the time domain resource, in 5G NR, a subframe is further divided into several slots (slots), and a quantity of slots included in the subframe is subject to a subcarrier spacing. Regardless of a value of the subcarrier spacing, one slot includes 14 orthogonal frequency division multiplexing (orthogonal frequency division multiplexing, OFDM) symbols. In other words, a larger subcarrier spacing indicates shorter actual duration of one slot.

Currently, slots in 5G NR may be configured as three types: a downlink slot (D Slot), an uplink slot (U Slot), and a flexible slot (S Slot). The flexible slot may also be referred to as a self-contained slot (self-contained slot), and may be further divided into a downlink sending dominant (DL-dominant) slot and an uplink sending dominant (UL-dominant) slot. The flexible slot may include a downlink symbol (namely, a D symbol), an uplink symbol (namely, a U symbol), or a null symbol, and the null symbol is a symbol on which no transmission of uplink or downlink data is performed. An uplink transmission symbol in the DL-dominant slot may be used for transmission of uplink control information and a reference signal SRS. Similarly, a downlink transmission symbol in the UL-dominant slot may be used for transmission of downlink control information.

In addition, in NR, any symbol in the slot can be configured as a downlink symbol, an uplink symbol, or a flexible symbol. In other words, symbols may be configured as three types: a downlink symbol, an uplink symbol, and a flexible symbol.

In this application, for example, a type of the slot and/or the symbol may be dynamically configured, semi-statically configured, or statically configured. This is not specifically required.

In frequency domain, 12 contiguous subcarriers are defined as a resource block (resource block, RB) in NR. A larger subcarrier spacing indicates a larger actual bandwidth corresponding to one RB. An RB may be mapped to a physical resource block (physical resource block, PRB), and the PRB is defined as a physical resource block within a bandwidth part (bandwidth part, BWP).

In addition, in NR, a resource element (resource element, RE) (or a resource element) is a minimum resource unit in NR, and is defined as follows: The resource element occupies one OFDM symbol in time domain and occupies one subcarrier in frequency domain.

### 2. Uplink transmission

In this application, the uplink transmission may include transmission of an uplink signal and/or an uplink channel. The uplink signal is, for example, an uplink reference signal such as an uplink demodulation reference signal (demodulation reference signal, DMRS) or a sounding reference signal (sounding reference signal, SRS). The uplink channel includes, for example, a physical uplink control channel (physical uplink control channel, PUCCH) or a physical downlink shared channel (physical uplink shared channel, PUSCH). The PUSCH may be used to transmit uplink data, and may also be used to transmit control information such as a precoding matrix indicator (precoding matrix indicator, PMI), a channel quality indicator (channel quality indicator, CQI), or a rank indicator (rank indicator, RI). The PUCCH is an uplink control channel, and can transmit only uplink control information, but cannot transmit the uplink data.

Currently, in an uplink transmission process, when the terminal device has uplink data to be sent, the terminal device may generate a buffer status report (buffer status report, BSR), and send a scheduling request (scheduling request, SR) to the network device when being triggered by the BSR. The network device may allocate an uplink resource to the terminal device based on the SR, and the terminal transmits the BSR on the allocated uplink resource. The BSR may be used to notify the terminal device of an amount of buffered data. In this way, the network device may allocate an uplink resource of an appropriate size to the terminal device. In this case, uplink data in a buffer of the terminal includes control information and service data, and a data amount is a size of the uplink data.

### 3. Downlink transmission

In this application, the downlink transmission may include transmission of a downlink signal and/or a downlink channel. The downlink signal is, for example, a downlink reference signal such as a downlink DMRS or a channel state information-reference signal (channel state information-reference signal, CSI-RS). The downlink channel includes, for example, a physical downlink control channel (physical downlink control channel, PDCCH) or a physical downlink shared channel (physical downlink shared channel, PDSCH). The PDSCH may be used to transmit downlink data and downlink control information. The PDCCH may be used for transmission of downlink control information (downlink control information, DCI) or other downlink control information, and is not used for transmission of downlink data. For example, the DCI may be used to dynamically schedule user data, for example, indicate a resource that carries downlink data in the PDSCH and/or the PUSCH.

### 4. Subband full duplex (subband full duplex, SBFD) technology

In the subband full duplex technology, reception and transmission of uplink and downlink signals may be simultaneously performed at different frequency domain locations. To avoid interference caused by a transmitted signal to a received signal in a base station module AAU, sufficient interference isolation needs to be implemented between the transmitted signal and the received signal. Therefore, an antenna array needs to be partitioned, so that a part of the array is used for transmission and the other part is used for reception. In this case, there is sufficient space isolation between subarrays. Assuming that an effective antenna area of an uplink reception link is reduced by half compared with an entire antenna array, a 3 decibel (dB) loss for an array gain is caused compared with a baseline using a complete available array region for a transmitter (transmitter, TX) or a receiver (receiver, RX) in a separate time slot, resulting in reception performance deterioration.

For example, in a time division duplex (time division duplex, TDD) technology, it is assumed that an array for reception and an array for transmission have a same size, and an entire array for reception and transmission is shown in FIG. 2. It can be learned that, in a TDD mode, reception and sending are performed in different slots, and both reception and sending are applicable to all arrays. It may be understood that, in the accompanying drawings of this application, Tx represents a transmit channel, Rx represents a receive channel, and TRx represents a transceiver channel (including a transmit channel and a receive channel).

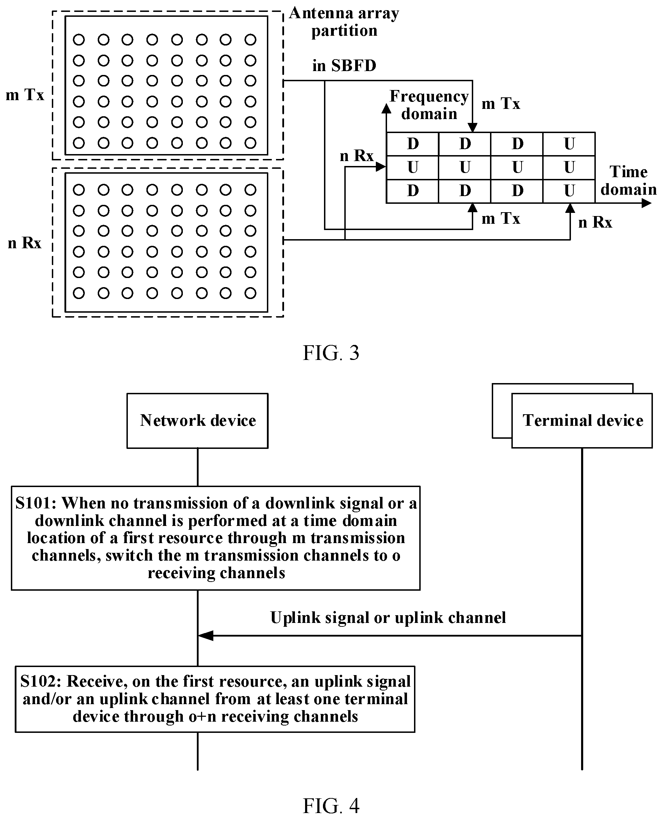

However, in the subband full duplex technology, it is assumed that an array for reception and an array for transmission are isolated from each other, and a half of an array is used for reception and the other half of the array is used for sending. As shown in FIG. 3, that is, in a same slot, simultaneous reception and sending may be supported, and a half of the array is used for reception and the other half of the array is used for sending. Compared with the array structure shown in FIG. 2, a 3 dB array loss is caused when an uplink signal is received, resulting in uplink reception performance deterioration. It may be understood that, in the accompanying drawings of this application, Tx represents a transmit channel, Rx represents a receive channel, and TRx represents a transceiver channel (including a transmit channel and a receive channel).

To use an entire array for an uplink in a subband full duplex scenario, obtain a gain for the entire array, and improve uplink communication performance, an embodiment of this application provides a communication method. As shown in FIG. 4, the method may include the following steps.

S101: When no transmission of a downlink signal or a downlink channel is performed at a time domain location of a first resource through m transmit channels, a network device switches the m transmit channels to o receive channels, where m and o are positive integers. The o receive channels and the m transmit channels correspond to a same antenna element.

A type of the first resource is an uplink resource and/or a downlink resource.

For example, when a target resource is configured as an uplink resource, no transmission of a downlink signal or a downlink channel is performed at any frequency domain location and any time domain location of the target resource. Therefore, the first resource includes the target resource. For another example, when the target resource is configured as a downlink resource, downlink transmission may be performed on the target resource. If downlink transmission is not performed on the target resource through the m transmit channels of the network device, the network device may switch the m transmit channels to the o receive channels, to increase an array gain for receiving an uplink signal on the target resource. That is, in this case, the first resource includes the target resource.

Optionally, the time domain location of the first resource may be at least one slot or at least one OFDM symbol. In other words, when determining that the at least one slot or the at least one OFDM symbol is not used for transmission of the downlink signal or the downlink channel, the network device may switch the m transmit channels to the o receive channels.

Optionally, m≠o. That is, the o receive channels and the m transmit channels correspond to the same antenna element, and a quantity m may be different from a quantity o. For example, an antenna element is connected to a maximum of K transmit channels or receive channels, where K is a positive integer, and m and o are both positive integers less than or equal to K.

In addition, a frequency domain location of the first resource may be understood as a full frequency band or a specified frequency band, and the specified frequency band is, for example, a BWP bandwidth activated by a terminal device. This is not specifically limited.

In a possible implementation, the network device in this application may switch a channel connected to the antenna element, to implement switching between a transmit channel and a receive channel. For example, the o receive channels and the m transmit channels correspond to the same antenna element. Therefore, when switching the m transmit channels to the o receive channels, the network device may switch channels connected to the antenna element from the m transmit channels to the o receive channels. Similarly, when switching the o receive channels to the m transmit channels, the network device may switch channels connected to the antenna element from the o receive channels to the m transmit channels.

Optionally, in this application, a plurality of antenna elements may form an antenna array. Therefore, in some cases, the antenna elements and the antenna array may be replaced with each other. For example, the network device may switch channels connected to an antenna element, where the antenna element may be replaced with an antenna array. Other examples are not described in detail again.

S102: The network device receives, on the first resource, an uplink signal and/or an uplink channel from at least one terminal device through o+n receive channels, where n is a positive integer.

The uplink signal and/or the uplink channel from the at least one terminal device may include at least one of a reference signal, data, a message, a channel, information, or signaling.

Based on the method shown in FIG. 4, when the network device does not perform transmission of a downlink signal or downlink channel at the time domain location of the first resource, the network device may switch the m transmit channels to the o receive channels. Therefore, the terminal device may receive, on the first resource, a signal from the at least one terminal device through the o+n receive channels, where n may be a quantity of receive channels that are originally used by the terminal device to receive an uplink signal before switching. Therefore, compared with performing reception through a maximum of n receive channels, the method can increase an array gain when the network device receives an uplink signal, to obtain better uplink reception performance.

Optionally, when a downlink signal and a downlink channel need to be transmitted at a time domain location of a second resource through the m transmit channels, the network device may further switch the o receive channels to the m transmit channels. Therefore, the network device sends the downlink signal or channel on the second resource through the m transmit channels. In addition, the network device may further receive the uplink signal on the second resource through the n receive channels.

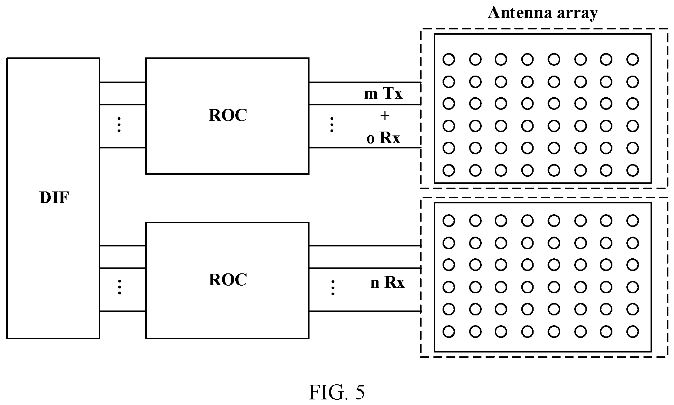

The following describes an embodiment of this application with reference to FIG. 5.

As shown in FIG. 5, in a subband full duplex scenario, an AAU on a base station side may support a connection to a part of an antenna array (referred to as a first part below for ease of differentiation) through n receive channels, and a connection to the other part of the antenna array (referred to as a second part below for ease of differentiation) through m transmit channels or o receive channels. The second part of the antenna array may be used for sending or reception through switching between the m transmit channels and the o receive channels. In other words, when the m transmit channels are connected to the second part of the antenna array, the second part of the antenna array may implement signal sending; when the o receive channels are connected to the second part of the antenna array, the second part of the antenna array may implement signal reception. In this case, the AAU is connected to the antenna array through o+n receive channels, so that an entire antenna array is used for receiving an uplink signal. As shown in FIG. 5, in an optional implementation, the m transmit channels and the o receive channels are connected to a same radio on chip (radio on chip, RoC), n Rx receive channels are connected to another RoC, and the RoCs are connected to a same digital intermediate frequency (digital intermediate frequency, DIF).

Specifically, for a BBU on the base station side, based on a subband full duplex configuration, slot configurations of different subbands, and downlink scheduling load: when scheduling is performed in both downlink and uplink slots, uplink reception is performed based on a part of an array; and when no scheduling is performed in downlink slots with low downlink load, or slots in all subbands are slots for uplink scheduling, uplink adaptive reception changes from reception on half of an array to reception on an entire array.

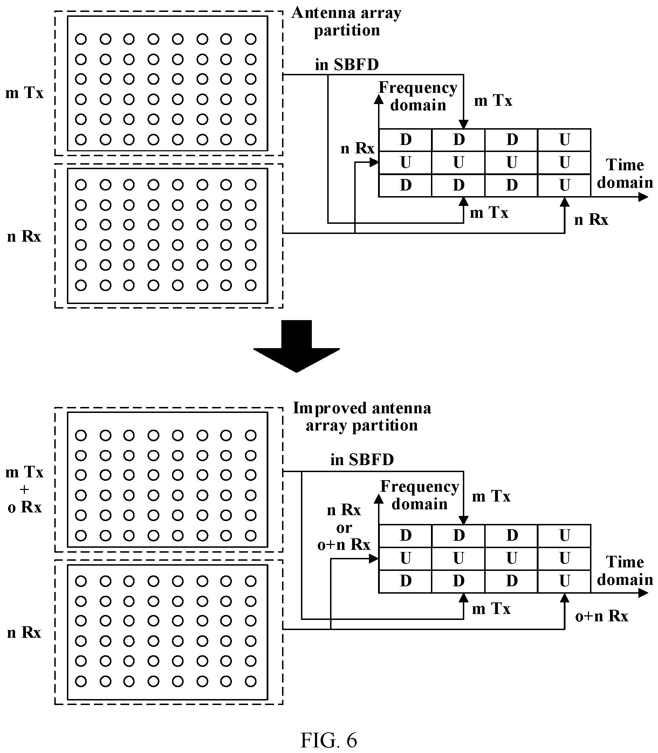

As shown in FIG. 6, for the BBU on the base station side, based on a subband full duplex configuration, slot configurations of different subbands, and downlink scheduling load, uplink adaptive reception is switched between reception on a part of an array and reception on an entire array.
(1) When a first resource is a downlink resource, and no scheduling is performed in downlink slots with low downlink load, a network device may switch m Tx channels to o Rx channels, and an uplink is connected to o+n receive channels through an entire array, that is, an uplink signal is received on the entire array. When scheduling is performed in a downlink slot, the network device may switch the o Rx channels to the m Tx channels, and the uplink is connected to n Rx channels through a part of an array, that is, the uplink signal is received on a part of the array.
(2) When a first resource is an uplink resource, the network device may switch the m Tx channels to the o Rx channels, and an uplink is connected to the o+n receive channels through an entire array, that is, an uplink signal is received on the entire array.

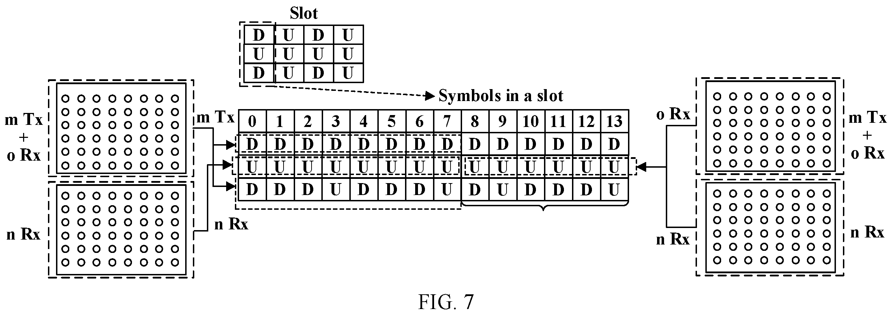

Specifically, as shown in FIG. 7, it is assumed that the first resource and a second resource include one or more OFDM symbols in a slot. When the first resource is a symbol 0 to a symbol 7, and the network device determines that no transmission of a downlink signal or a downlink channel is performed on the symbol 0 to the symbol 7, the network device may switch m Tx channels to o Rx channels. Therefore, an uplink signal is received on o+n receive channels at a time domain location of the symbol 0 to the symbol 7. When the second resource is a symbol 8 to a symbol 13, and the network device determines that a downlink signal or a downlink channel needs to be sent on the symbol 8 to the symbol 13, the network device may switch the o Rx channels to the m Tx channels, so that on the symbol 8 to the symbol 13, the network device may send the downlink signal or channel through the m Tx channels, and receive the uplink signal through n Rx channels.

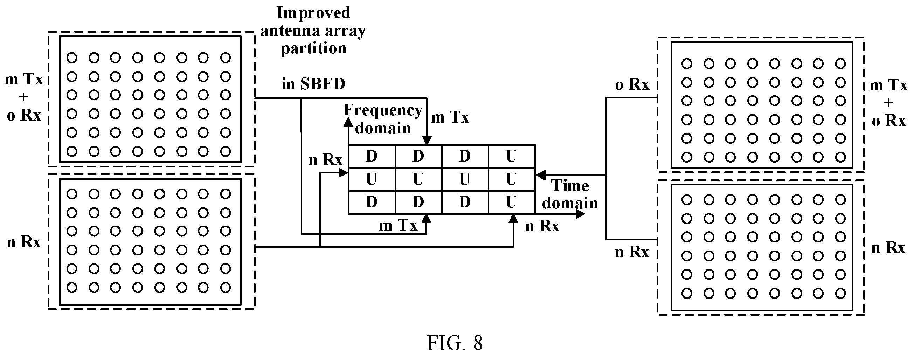

Still as shown in FIG. 8, an uplink and a downlink coexist at different locations in a slot 0 to a slot 2 in frequency domain. It is assumed that transmission of a downlink signal or a downlink channel is performed in each of the slot 0 to the slot 2. The network device may send a downlink signal or channel through m Tx channels in the slot 0 to the slot 2, and receive an uplink signal through n Rx channels. In addition, a slot 3 is an uplink slot. Therefore, no transmission of a downlink signal or a downlink channel is performed in the slot 3. In this case, the first resource is the slot 3. The network device may switch the m Tx channels to o Rx channels. Therefore, the network device may receive an uplink signal through o+n receive channels at a time domain location of the slot 3. Before the slot 3, the network device may switch the m Tx channels to the o Rx channels.

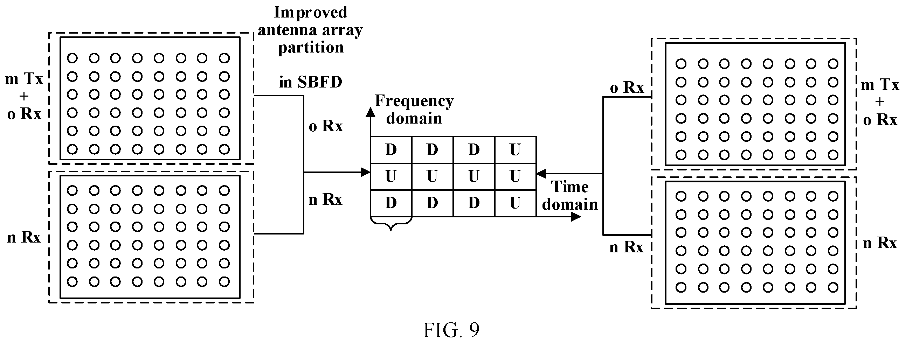

Still as shown in FIG. 9, each of a slot 0 to a slot 2 is a flexible slot or a downlink slot. It is assumed that no transmission of a downlink signal or a downlink channel is performed in the slot 0, transmission of a downlink signal or a downlink channel is performed in each of a slot 1 to a slot 2, and a slot 3 is a downlink slot. In this case, the network device may receive an uplink signal in the slot 0 through o+n receive channels, and may send a downlink signal or channel in the slot 1 to the slot 2 through m Tx channels and receive an uplink signal through n Rx channels, and receive an uplink signal in the slot 3 through o+n receive channels. Before the slot 0, the network device may switch the m Tx channels to the o Rx channels; before the slot 1, the network device may switch the o Rx channels to the m Tx channels; and before the slot 3, the network device may switch the m Tx channels to the o Rx channels.

It may be understood that, based on a same concept, an embodiment of this application further provides a communication apparatus. The communication apparatus may include a corresponding hardware structure and/or software module for performing various functions. Persons skilled in the art should be readily aware that, with reference to the units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

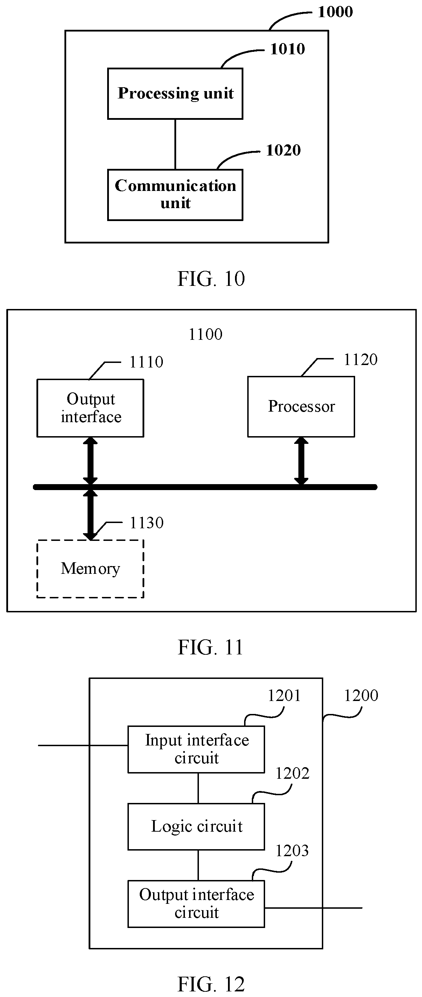

FIG. 10 to FIG. 12 are diagrams of structures of possible communication apparatuses according to embodiments of this application. The communication apparatuses may be configured to implement functions of the network device in the foregoing method embodiments, and can also achieve beneficial effects of the foregoing method embodiments. In a possible implementation, the communication apparatus may be the network device shown in FIG. 1 or a component, for example, an AAU, in the network device. For related details and effects, refer to the descriptions in the foregoing embodiments.

As shown in FIG. 10, a communication apparatus 1000 includes a processing unit 1010 and a communication unit 1020. The communication unit 1020 may alternatively be a transceiver unit, an input/output interface, or the like. The communication apparatus 1000 may be configured to implement the functions of the first communication apparatus in the method embodiment shown in FIG. 4.

When no transmission of a downlink signal or a downlink channel is performed through m transmit channels at a time domain location of a first resource, the processing unit 1010 may be configured to switch the m transmit channels to o receive channels, where the o receive channels and the m transmit channels correspond to a same antenna element. The communication unit 1020 may be configured to receive, on the first resource, an uplink signal and/or an uplink channel from at least one terminal device through o+n receive channels, where m, o, and n are positive integers.

Optionally, the first resource is an uplink resource and/or a downlink resource.

Optionally, the time domain location of the first resource is at least one slot or at least one orthogonal frequency division multiplexing OFDM symbol.

Optionally, when transmission of a downlink signal or a downlink channel needs to be performed through the m transmit channels at a time domain location of the second resource, the processing unit 1010 may be further configured to switch the o receive channels to the m transmit channels.

Optionally, the second resource is a downlink resource.

Optionally, the time domain location of the second resource is at least one slot or at least one OFDM symbol.

Division of the modules in embodiments of this application is an example, is merely logical function division, and may be performed in other manners during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 11 shows a communication apparatus 1100 according to an embodiment of this application. The communication apparatus 1100 is configured to implement the communication method provided in this application. The communication apparatus 1100 may be a network device to which the communication method is applied, or may be a component in the network device, or may be an apparatus that can be used in a matching manner with the network device. The communication apparatus 1100 may be a chip system or a chip. In embodiments of this application, the chip system may include a chip, or may include a chip and another discrete component. The communication apparatus 1100 includes at least one processor 1120, configured to implement the communication method provided in embodiments of this application. The communication apparatus 1100 may further include an output interface 1110, where the output interface may also be referred to as an input/output interface. In embodiments of this application, the output interface 1110 may be configured to communicate with another apparatus via a transmission medium, and a function of the output interface 1110 may include sending and/or reception. For example, when the communication apparatus 1100 is a chip, the communication apparatus 1100 performs transmission with another chip or device through the output interface 1110. The processor 1120 may be configured to implement the method shown in the foregoing method embodiment.

For example, the processor 1120 may be configured to perform an action performed by the processing unit 1010, and the output interface 1110 may be configured to perform an action performed by the communication unit 1020. Details are not described again.

Optionally, the communication apparatus 1100 may further include at least one memory 1130, configured to store program instructions and/or data. The memory 1130 is coupled to the processor 1120. The coupling in embodiments of this application may be an indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. At least one of the at least one memory may be integrated with the processor.

In embodiments of this application, the memory 1130 may be a nonvolatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In embodiments of this application, the processor 1120 may be a general purpose processor, a digital signal processor, an application-specific integrated circuit, a field programmable gate array or another programmable logic device, a discrete gate or a transistor logic device, or a discrete hardware component, and may implement or perform the various methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of a hardware module and a software module in the processor.

FIG. 12 shows a communication apparatus 1200 according to an embodiment of this application. The communication apparatus 1200 is configured to implement the communication method provided in this application. The communication apparatus 1200 may be a network device to which the communication method shown in embodiments of this application is applied, or may be a component in the network device, or may be an apparatus that can be used in a matching manner with the network device. The communication apparatus 1200 may be a chip system or a chip. In embodiments of this application, the chip system may include a chip, or may include a chip and another discrete component. A part or all of the communication method provided in the foregoing embodiments may be implemented by hardware or software. When the communication method is implemented by hardware, the communication apparatus 1200 may include an input interface circuit 1201, a logic circuit 1202, and an output interface circuit 1203.

Optionally, an example in which the apparatus is configured to implement a function of a receive end is used. The input interface circuit 1201 may be configured to perform a receiving action performed by the communication unit 1020, the output interface circuit 1203 may be configured to perform a sending action performed by the communication unit 1020, and the logic circuit 1202 may be configured to perform an action performed by the processing unit 1010. Details are not described again.

Optionally, in a specific implementation, the communication apparatus 1200 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for implementing the foregoing method embodiments.

An embodiment of this application provides a computer program product including instructions. The instructions, when executed on a computer, cause the computer to implement the foregoing method embodiments.

An embodiment of this application provides a communication system. Specifically, the communication system may include a network device configured to implement the method shown in FIG. 4, and may further include at least one terminal device or terminal apparatus that performs transmission with the network device. For details, refer to related descriptions in the foregoing method embodiments. Details are not described herein again. The communication system may include the structure shown in FIG. 1.

Persons skilled in the art should understand that embodiments of this application may be provided as a method, a system, or a computer program product. Therefore, this application may use a form of hardware-only embodiments, software-only embodiments, or embodiments with a combination of software and hardware. In addition, a form of a computer program product that is implemented on one or more computer-usable storage media (including but not limited to a magnetic disk memory, a CD-ROM, an optical memory, and the like) that include computer-usable program code may be used in this application.

This application is described with reference to flowcharts and/or block diagrams of the method, the device (system), and the computer program product according to embodiments of this application. It should be understood that computer program instructions may be used to implement each process and/or each block in the flowcharts and/or the block diagrams and a combination of processes and/or blocks in the flowcharts and/or the block diagrams. These computer program instructions may be provided for a general purpose computer, a dedicated computer, an embedded processor, or a processor of another programmable data processing device to generate a machine, so that the instructions executed by the computer or the processor of the another programmable data processing device generate an apparatus for implementing a designated function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate a manufactured product including an instruction apparatus. The instruction apparatus implements a designated function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a designated function in one or more processes in the flowcharts and/or in one or more blocks in the block diagrams.

Although preferred embodiments of this application have been described, persons skilled in the art can make additional changes and modifications to these embodiments after they learn of a basic creative concept. Therefore, the appended claims are intended to be construed as covering the preferred embodiments and all changes and modifications falling within the scope of this application.

It is clear that persons skilled in the art may make various modifications and variations to embodiments of this application without departing from the scope of embodiments of this application. In this case, this application is intended to cover these modifications and variations of embodiments of this application provided that they fall within the scope of the claims of this application and their equivalent technologies.

## Claims

1. A communication method, comprising:
when no transmission of a downlink signal or a downlink channel is performed at a time domain location of a first resource through m transmit channels, switching the m transmit channels to o receive channels, wherein the o receive channels and the m transmit channels correspond to a same antenna element; and
receiving, on the first resource, an uplink signal and/or an uplink channel from at least one terminal device through o+n receive channels, wherein m, o, and n are positive integers.

2. The method according to claim 1, wherein the first resource is an uplink resource and/or a downlink resource.

3. The method according to claim 1 or 2, wherein the time domain location of the first resource is at least one slot or at least one orthogonal frequency division multiplexing OFDM symbol.

4. The method according to any one of claims 1 to 3, wherein the method further comprises:
when transmission of a downlink signal or a downlink channel needs to be performed at a time domain location of a second resource through the m transmit channels, switching the o receive channels to the m transmit channels.

5. The method according to claim 4, wherein the second resource is a downlink resource.

6. The method according to claim 4 or 5, wherein the time domain location of the second resource is at least one slot or at least one OFDM symbol.

7. A communication apparatus, comprising:
a processing unit, configured to: when no transmission of a downlink signal or a downlink channel is performed at a time domain location of a first resource through m transmit channels, switch the m transmit channels to o receive channels, wherein the o receive channels and the m transmit channels correspond to a same antenna element; and
a communication unit, configured to receive, on the first resource, an uplink signal and/or an uplink channel from at least one terminal device through o+n receive channels, wherein m, o, and n are positive integers.

8. The apparatus according to claim 7, wherein the first resource is an uplink resource and/or a downlink resource.

9. The apparatus according to claim 7 or 8, wherein the time domain location of the first resource is at least one slot or at least one orthogonal frequency division multiplexing OFDM symbol.

10. The apparatus according to any one of claims 7 to 9, wherein the processing unit is further configured to:
when transmission of a downlink signal or a downlink channel needs to be performed at a time domain location of a second resource through the m transmit channels, switch the o receive channels to the m transmit channels.

11. The apparatus according to claim 10, wherein the second resource is a downlink resource.

12. The apparatus according to claim 10 or 11, wherein the time domain location of the second resource is at least one slot or at least one OFDM symbol.

13. A communication apparatus, comprising a processor, wherein when the communication apparatus runs, the processor is configured to execute one or more computer programs stored in a memory, to cause the communication apparatus to perform the method according to any one of claims 1 to 6.

14. A computer-readable storage medium, wherein the storage medium stores a computer program or instructions, and when the computer program or the instructions are executed by a communication apparatus, the method according to any one of claims 1 to 6 is implemented.
